# EUROPEAN PATENT SPECIFICATION

(11) **EP 0 399 976 B1**
(45) Date of publication and mention of the grant of the patent: **05.04.1995**
(21) Application number: 90850191.9
(22) Date of filing: 21.05.1990
(51) Int. Cl.: D21G 1/02, F16C 13/00

(54) **Method for regulating the temperature of an adjustable-crown roll and regulation system intended for carying out the method**
Verfahren zur Steuerung der Temperatur einer Walze mit anpassbarer Biegelinie und Regelungssystem zur Durchführung des Verfahrens
Procédé de régulation de la température d'un rouleau à réglage de flexion et système de régulation pour l'application du procédé

(30) Priority: 22.05.1989 FI 892463
(43) Date of publication of application: 28.11.1990
(73) Proprietor: VALMET PAPER MACHINERY INC., 00130 Helsinki (FI)
(72) Inventor: Niskanen, Juhani, FI-90460 Oulunsalo (FI); Eskelinen, Juhani, FI-40600 Jyväskylä (FI)
(74) Representative: Rostovanyi, Peter

(56) References cited:
- DE-A- 2 902 956
- GB-A- 1 185 937
- US-A- 3 703 862
- US-A- 4 757 582

## Description

The invention concerns a method for regulating the temperature of an adjustable-crown roll, according to the preamble of claim 1.

The invention further concerns a regulation system intended for carrying out the method in an adjustable-crown roll, according to the preamble of claim 4.

The preambles of claims 1 and 4 are based on GB-A-1,185,937
In paper machines, such rolls are commonly used as form a dewatering press nip, a smoothing nip, or a calendering nip together with a backing roll. In these purposes of use, and so also, e.g., in a supercalender, it is important that the distribution of the linear load, i.e. the profile, in the nip in the axial direction of the rolls can be made invariable or that this profile can be regulated as desired, for example, in view of controlling the transverse moisture profile and/or thickness profile (caliper) of the web. For this purpose, in prior art, several different adjustable-crown rolls are known, by whose means attempts are made to act upon the distribution of the linear load in a nip. As a rule, such rolls comprise a massive or tubular, stationary roll axle and a roll mantle arranged revolving around said roll axle. Between said axle and said mantle, a glide-shoe arrangement and/or a chamber or series of chambers of pressure fluid are fitted, which act upon the inner face of the mantle, so that the axial profile of the mantle at the nip can be straightened or adjusted as desired. The present invention is in particular related to such variable-crown rolls in which there is a chamber or series of chambers of pressure fluid between the roll axle and the roll mantle, the distribution of linear load of the roll being adjusted as desired by passing pressure medium into said chamber or series of chambers.

In such rolls, one problematic point consists of the temperature profile of the roll. Especially in rolls in which the roll mantle is provided with a resilient coating, such as a polyurethane or rubber coating, it is important that the temperature level of the roll mantle should be sufficiently low and uniform. A uniform temperature promotes the formation of a uniform linear load as well as uniformity of the operation of the roll nip in the transverse direction of the web.

In the prior-art rolls of the type described above, attempts have been made to affect the roll temperature, e.g., so that, into the pressure-fluid chamber in the roll, cooling/heating fluid has been fed from one end of the roll, and the return-fluid duct has been provided at the opposite end of the roll. In such a roll, the temperature of the roll mantle is, however, not uniform in the transverse direction of the roll, but the temperature of the roll mantle is changed towards the other end of the roll, becoming higher or lower in a linear way, depending on whether cooling fluid or heating fluid is supplied into the pressure-fluid chamber. Additionally, attempts have been made to solve the problem of roll temperature so that, especially in rolls that require cooling, the cooling fluid has been passed into the pressure-fluid chamber, e.g., from two points. This has, however, had the consequence that the temperature distribution in the roll has been highly uneven. According to a third alternative, in prior-art solutions, the regulation of temperature has been arranged, in particular in rolls to be cooled, so that the cooling fluid has been passed into the pressure-fluid chamber in the roll out of one end and removed through the opposite end, whereas the circulation of cooling fluid in the unpressurized chamber in the roll has been arranged in the opposite direction. This has, however, resulted in the substantial drawback that the temperature profile of the roll has been highly complicated, which is an even worse drawback than a linear change in the temperature.

The object of the present invention is to provide an essential improvement over the prior-art solutions and to avoid the drawbacks related to the regulation of the temperature in prior-art adjustable-crown rolls. In view of achieving this, the method in accordance with the invention is characterized by the features stated in the characterizing portion of claim 1.

The invention may be carried out so that fluid intended for regulation of the temperature is fed into the unpressurized space or chamber between the roll mantle and the axle as uniformly distributed across the axial length of the roll.

On the other hand, the regulation system in accordance with the invention is characterized by the features stated in the characterizing portion of claim 4.

By means of the invention, a number of significant advantages are obtained over prior art, of which, e.g., the following should be stated. By means of the method of the invention, a highly uniform temperature profile is obtained, because, especially in rolls that require cooling, the cooling fluid is passed both into the pressure chamber in the roll and into the unpressurized chamber in the roll as substantially uniformly distributed over the areas that require cooling. Moreover, the pressurization of the pressure fluid is taken care of by means of the same circulation of fluid, so that cooling fluid and pressure fluid need not be fed into the pressure chamber separately. It is a further remarkable advantage of the invention that the method and the system in accordance with the invention can be applied as such to existing variable-crown rolls. The further advantages and characteristic features of the invention come out from the following detailed description of the invention and of the appended claims 6 to 8.

In the following, the invention will be described in detail with reference to the figures in the accompanying drawing.

Figure 1 is a schematical cross-sectional view of a variable-crown roll which forms a nip with a backing roll and to which the method and the system in accordance with the invention can be applied.

Figure 2 is a schematical longitudinal vertical sectional view of a roll shown in Fig. 1 and of the fluid circulation system in the roll.

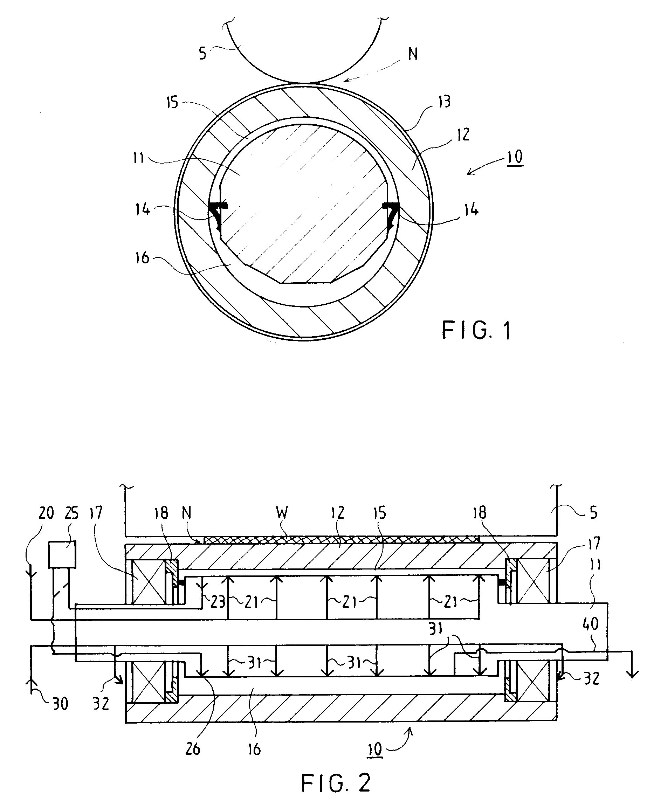

In Fig. 1, the variable-crown roll is denoted generally with the reference numeral 10. The roll 10 forms a nip N with a backing roll, which is denoted with the reference numeral 5. The roll 10 comprises a stationary axle 11, on which the roll mantle 12 is arranged as revolving. The mantle 12 is provided with a coating 13, which may be, e.g., polyurethane, rubber, or equivalent. The construction of the roll 10 shown in Fig. 1 is such that therein, between the roll axle 11 and the roll mantle 12, a pressure-fluid chamber or a series of chambers is provided, the profile of the roll mantle being straightened by feeding pressure fluid into said chamber or series of chambers. Said pressure chamber, i.e. the first chamber, is denoted with the reference numeral 15. The pressure chamber 15 is additionally defined by longitudinal seals 14, by means of which the roll axle 11 is sealed relative the inner face of the mantle 12 so that a second chamber 16 remains at the other side of the longitudinal seals 14, which said second chamber is unpressurized or in which the pressure is at least substantially lower than the pressure present in the pressure chamber 15. Moreover, in Fig. 2, it is shown that the roll mantle 12 is supported on the roll axle 11 as revolving by means of end bearings 17 and that, in the areas of the roll ends, the pressure chamber 15 is sealed by means of end seals 18. In Fig. 2, the reference denotation in refers to the web that runs through the nip N.

Fig. 2 is a schematical illustration of a fluid-circulation and temperature-regulation system of a variable-crown roll 10. The pressure fluid required for pressurization of the pressure chamber 15 is fed into the roll through the first circuit, i.e. the primary circuit 20, from which it is passed into the pressure chamber 15 through the nozzles 21. In order that the pressure in the pressure chamber 15 could be maintained at the desired level, an outlet pipe 23 is connected to the pressure 15, said pipe 23 communicating with a regulator 25 of pressure difference, through which the fluid passed out of the pressure chamber 15 is passed further along the feed pipe 26 into the unpressurized second chamber 16. The pressure fluid passed through the primary circuit 20 into the pressure chamber 15 is kept at the suitable temperature so that, if the roll 10 requires cooling, said pressure fluid operates as cooling fluid at the same time. By means of the several nozzles 21, which are distributed evenly across the length of the roll 10, attempts have been made to illustrate schematically that the pressure/temperature-regulation fluid, which is, for example, cooling fluid, is introduced into the pressure chamber 15 in the roll as substantially uniformly distributed across the axial length of the roll. Fluid is introduced into the pressure chamber 15 in a necessary amount to keep the roll temperature at the correct level, and the regulation of the pressure in the pressure chamber 15 is arranged by means of the pressure-difference regulator 25 by pacing any excess fluid through said pressure-difference regulator 25 out of the pressure chamber 15 into the second chamber 16.

According to Fig. 2, the roll 10 is additionally provided with a second fluid circulation circuit, i.e. secondary circuit 30, by means of which the temperature-regulation fluid is passed into the unpressurized second chamber 16 in the roll. In the case of Fig. 2, said temperature-regulation fluid is cooling fluid. Through the secondary circuit 30, the cooling fluid is passed into the second chamber 16 in the roll through a number of nozzles 31, so that the cooling fluid is fed as substantially uniformly distributed over the axial length of the roll. In the embodiment of Fig. 2, the secondary circuit 30 also takes care of the lubrication of the end bearings 17 of the roll, and for this purpose the secondary circuit 30 is provided with lubrication nozzles 32, through which fluid is passed to said end bearings 17. Moreover, the second chamber 16 in the roll is connected with a return pipe 40, through which any excess fluid is passed out of the second chamber 16 in the roll into the tank (not shown) and to recirculation.

Thus, with reference to the above description, it is an essential feature of the invention that the cooling/heating fluid is passed to the roll as substantially uniformly distributed over the areas that require heating or cooling and that the pressurization of the pressure chamber 15 in the roll 10 is also taken care of by means of the same heating/cooling fluid. In respect of Fig. 2, it should be stated further that therein such a roll 10 is shown as is provided with a unified pressure chamber 15 which extends from end to end in the roll. The invention can, however, also be applied to rolls in which the pressure chamber 15 is divided into a series of chambers by means of transverse seals, into which said separate chambers in a series of chambers it is possible to feed pressures of different levels. In such a case, of course, each chamber in the series of chambers must be provided with an outlet pipe and with a pressure-difference regulator of its own.

Above, the invention has been described by way of example with reference to the example shown in the figures in the accompanying drawing. The invention is, however, not supposed to be confined to the example described alone, but many variations are possible within the scope of the inventive idea defined in the attached patent claims.

## Claims

1. Method for regulating the temperature of an adjustable-crown roll, in which said roll (10) the roll mantle (12) arranged revolving on a stationary axle (11) is loaded by passing a pressure medium into a pressure chamber (15) or series of chambers formed between the axle (11) and the mantle (12) so as to correct the deflection of the roll mantle (12), said pressure chamber/chambers being sealed from a substantially unpressurized chamber (16) between the axle (11) and the roll mantle (12) **characterized** in that the pressurization of the pressure chamber (15) or the series of chambers in the roll (10) is carried out by means of a heating/cooling fluid used for regulation of the temperature of the roll (10) introduced into the roll (10) and substantially uniformly distributed over the areas of the roll (10) in which heat is removed/produced in the radial direction of the roll and in that any excess amount of fluid is passed out of the pressure chamber (15) into the unpressurized chamber (16) in the roll through a pressure-difference regulator (25), said unpressurized chamber (16) being additionaly fed with said heating/cooling fluid from another source (30).

2. Method as claimed in claim 1, **characterized** in that the fluid intended for regulation of temperature is fed into the unpressurized chamber (16) between the roll mantle (12) and the axle (11) as uniformly distributed over the axial length of the roll (10).

3. Method as claimed in any of the preceding claims, **characterized** in that, when the fluid intended for regulation of temperature is cooling fluid, it is introduced into the roll (10) at a temperature colder than the temperature of equilibrium of the roll (10) and, in a corresponding way, when the fluid intended for regulation of temperature is heating fluid, it is introduced into the roll (10) at a temperature hotter than the temperature of equilibrium of the roll (10).

4. Regulation system intended for carrying out the method as claimed in any of the preceding claims in an adjustable-crown roll (10), which comprises a roll mantle (12) arranged as revolving on a stationary axle (11) by means of end bearings (17), said axle (11) and roll mantle (12) being sealed relative one another by means of longitudinal seals (14) so that, between the axle (11) and the roll mantle (12), said longitudinal seals (14) define a substantially unpressurized chamber (16), on one hand, and a pressure chamber (15) or a series of chambers, on the other hand, the deflection of the roll mantle (12) being corrected by means of the pressure of the pressure medium supplied into said pressure chamber (15) or series of chambers, and in which said roll (10) circulation devices are provided for supplying pressure fluid to the pressure chamber/chambers, **characterized** in that said circulation devices comprise a first fluid-circulation circuit, i.e. a primary circuit (20), which is arranged to supply fluid for regulation of the temperature of the roll into the pressure chamber (15) of the roll, which said fluid is pressurized to the positive pressure required for the correction of the deflection of the roll mantle (12), as well as a second fluid-circulation circuit, i.e. a secondary circuit (30), which is arranged to supply same fluid for regulation of the temperature into the unpressurized chamber (16) in the roll, and in that the pressure chamber (15) communicates with the unpressurized chamber (16) through a pressure-difference regulator (25), through which any excess fluid is arranged to be passed from the pressure chamber (15) into the unpressurized chamber (16).

5. Regulation system as claimed in claim 4, **characterized** in that the primary circuit (20) is provided with a number of nozzles (21) fitted as substantially uniformly spaced over the length of the roll mantle (12) so as to introduce the fluid intended for regulation of temperature into the pressure chamber (15) as substantially uniformly distributed.

6. Regulation system as claimed in claim 4 or 5, **characterized** in that the secondary circuit (30) is provided with a number of nozzles (31) fitted as substantially uniformly spaced over the length of the roll mantle (12) so as to introduce the fluid intended for regulation of temperature into the unpressurized chamber (16) as substantially uniformly distributed.

7. Regulation system as claimed in any of the claims 4 to 7, **characterized** in that the secondary circuit (30) is provided with lubrication nozzles (32) for lubrication of the end bearings (17) of the roll (10).

## Patentansprüche

1. Verfahren zur Steuerung der Temperatur einer Walze mit anpaßbarer Biegelinie, wobei in der Walze (10) der an einer ortsfesten Achse (11) drehbar angeordnete Walzenmantel (12) dadurch belastet wird, daß ein Druckmedium in eine Druckkammer (15) oder in eine Reihe von Kammern geleitet wird, welche zwischen der Achse (11) und dem Mantel (12) ausgebildet sind, um die Abweichung des Walzenmantels (12) zu berichtigen, wobei die Druckkammer/-kammern gegen eine im wesentlichen nicht druckbeaufschlagte Kammer (16) zwischen der Achse (11) und den Walzenmantel (12) abgedichtet ist/sind, dadurch gekennzeichnet, daß die Druckbeaufschlagung der Druckkammer (15) oder der Reihe von Kammern in der Walze (10) mit Hilfe eines Heiz-/Kühlfluids durchgeführt wird, welches zur Temperatursteuerung der Walze (10) verwendet wird und in die Walze (10) eingeführt wird und über die Bereiche der Walze (10) im wesentlichen gleichmäßig verteilt wird, in welchen die Wärme in Radialrichtung der Walze entfernt/erzeugt wird, und daß jegliche Überschuß-Fluidmenge aus der Druckkammer (15) über eine Druckdifferenz-Regeleinrichtung (25) in die nicht druckbeaufschlagte Kammer (16) in der Walze geleitet wird, wobei die nicht druckbeaufschlagte Kammer (16) von einer weiteren Quelle (30) aus mit Heiz-/Kühlfluid zusätzlich versorgt wird.

2. Verfahren nach Anspruch 1, dadurch gekennzeichnet, daß das Fluid zur Temperatursteuerung in die nicht druckbeaufschlagte Kammer (16) zwischen dem Walzenmantel (12) und der Achse (11) eingespeist wird, und zwar über die Axiallänge der Walze (10) gleichmäßig verteilt.

3. Verfahren nach einem der vorstehenden Ansprüche, dadurch gekennzeichnet, daß wenn das Fluid zur Temperatursteuerung ein Kühlfluid ist, es bei einer Temperatur in die Walze (10) geleitet wird, welche kälter als die Gleichgewichtstemperatur der Walze (10) ist, und daß wenn das Fluid zur Temperatursteuerung ein Heizfluid ist, dieses auf entsprechende Weise bei einer Temperatur in die Walze (10) geleitet wird, welche wärmer als die Gleichgewichtstemperatur der Walze (10) ist.

4. Regelsystem zum Durchführen des Verfahrens nach einem der vorstehenden Ansprüche in einer Walze (10) mit anpaßbarer Biegelinie, welche einen mit Hilfe von Endlagern (17) auf einer ortsfesten Achse (11) drehbar angeordneten Walzenmantel (12) aufweist, wobei die Achse (11) und der Walzenmantel (12) mit Hilfe von Längsdichtungen (14) relativ zueinander derart abgedichtet sind, daß die Längsdichtungen (14) zwischen der Achse (11) und dem Walzenmantel (12) einerseits eine im wesentlichen nicht druckbeaufschlagte Kammer (16) definieren, und andererseits eine Druckkammer (15) oder eine Reihe von Kammern definieren, wobei die Abweichung des Walzenmantels (12) mit Hilfe des Druckes des in die Druckkammer (15) oder in die Reihe von Kammern eingespeisten Druckmediums berichtigt wird, wobei in der Walze (10) Zirkulationsvorrichtungen zum Einspeisen von Druckfluid zu der Druckkammer oder zu den Druckkammern vorgesehen sind, dadurch gekennzeichnet, daß die Zirkulationsvorrichtungen einen ersten Fluidzirkulationskreislauf, d.h. einen Primärkreislauf (20) aufweisen, welcher angeordnet ist, um Fluid zur Temperatursteuerung der Walze in die Druckkammer (15) der Walze zu speisen, wobei das Fluid mit für die Berichtigung der Abweichung des Walzenmantels (12) benötigten Überdruck beaufschlagt ist, sowie einen zweiten Fluidzirkulationskreislauf aufweisen, d.h. einen Sekundärkreislauf (30), welcher angeordnet ist, um das gleiche Fluid zur Temperatursteuerung in die nicht druckbeaufschlagte Kammer (16) in der Walze zu speisen, und daß die Druckkammer (15) mit der nicht druckbeaufschlagten Kammer (16) über eine Druckdifferenz-Regeleinrichtung (25) in Verbindung steht, über welche jegliches Überschuß-Fluid von der Druckkammer (15) in die nicht druckbeaufschlagte Kammer (16) geleitet wird.

5. Regelsystem nach Anspruch 4, dadurch gekennzeichnet, daß der Primärkreislauf (20) mit einer Anzahl von Düsen (21) versehen ist, die über die Länge des Walzenmantels (12) im wesentlichen gleichmäßig beabstandet angebracht sind, so daß das Fluid zur Temperatursteuerung in die Druckkammer (15) im wesentlichen gleichmäßig verteilt eingeführt wird.

6. Regelsystem nach Anspruch 4 oder 5, dadurch gekennzeichnet, daß der Sekundärkreislauf (30) mit einer Anzahl von Düsen (31) versehen ist, welche über die Länge des Walzenmantels (12) im wesentlichen gleichmäßig beabstandet angebracht sind, so daß das Fluid zur Temperatursteuerung in die nicht druckbeaufschlagte Kammer (16) im wesentlichen gleichmäßig verteilt eingeführt wird.

7. Regelsystem nach einem der Ansprüche 4 bis 7, dadurch gekennzeichnet, daß der Sekundärkreislauf (30) mit Schmierdüsen (32) zur Schmierung der Endlager (17) der Walze (10) versehen ist.

## Revendications

1. Procédé pour réguler la température d'un rouleau à couronne variable, dans lequel rouleau (10) l'enveloppe (12) montée de façon à tourner sur un axe stationnaire (11) est chargée en faisant passer un agent de pression dans la chambre de pression (15) ou dans une série de chambres formées entre l'axe (11) et l'enveloppe (12) de manière à corriger la déflexion de l'enveloppe (12) du rouleau, ladite chambre ou lesdites chambres de pression étant rendues étanches par rapport à une chambre sensiblement non pressurisée (16) entre l'axe (11) et l'enveloppe (12) du rouleau, caractérisé en ce que la pressurisation de la chambre de pression (15) ou de la série de chambres du rouleau (10) est réalisée au moyen d'un fluide de chauffage/refroidissement utilisé pour la régulation de la température du rouleau (10), introduit dans le rouleau (10) et distribué de façon sensiblement uniforme sur les régions du rouleau (10) dans lesquelles de la chaleur est évacuée/produite dans la direction radiale du rouleau, et en ce que toute quantité en excès du fluide est évacuée de la chambre de pression (15) vers la chambre non pressurisée (16) du rouleau par un régulateur de différence de pression (25), ladite chambre non pressurisée (16) étant en outre alimentée au moyen dudit fluide de chauffage/refroidissement à partir d'une autre source (30).

2. Procédé selon la revendication 1, caractérisé en ce que le fluide de régulation de la température est envoyé dans la chambre non pressurisée (16) entre l'enveloppe (12) et l'axe (11) du rouleau en étant distribué uniformément sur la longueur axiale du rouleau (10).

3. Procédé selon l'une quelconque des revendications précédentes, caractérisé en ce que lorsque le fluide de régulation de la température est un fluide de refroidissement, il est introduit dans le rouleau (10) à une température inférieure à la température d'équilibre du rouleau (10), et de manière correspondante, quand le fluide prévu pour la régulation est un fluide de chauffage, il est introduit dans le rouleau (10) à une température supérieure à la température d'équilibre du rouleau (10).

4. Système de régulation pour la mise en oeuvre du procédé selon l'une quelconque des revendications précédentes dans un rouleau à couronne variable (10), qui comprend une enveloppe (12) montée de façon rotative sur un axe stationnaire (11) au moyen de paliers d'extrémité (17), ledit axe (11) et l'enveloppe (12) du rouleau étant rendus étanches l'un par rapport à l'autre au moyen de joints longitudinaux (14) de manière qu'entre l'axe (11) et l'enveloppe (12) du rouleau, lesdits joints longitudinaux (14) définissent une chambre sensiblement non pressurisée (16) d'une part, et une chambre de pression (15) ou une série de chambres d'autre part, la déflexion de l'enveloppe (12) étant corrigée au moyen de la pression de l'agent de pression envoyé dans ladite chambre de pression (15) ou dans ladite série de chambres, et dans lequel rouleau (10) sont prévus des dispositifs de circulation pour envoyer du fluide sous pression dans la ou les chambres de pression, caractérisé en ce que lesdits dispositifs de circulation comprennent un premier circuit de circulation de fluide, c'est-à-dire un circuit primaire (20), qui est prévu pour envoyer du fluide en vue de la régulation de la température du rouleau dans la chambre de pression (15) du rouleau, lequel fluide est pressurisé à la pression positive nécessaire pour la correction de la déflexion de l'enveloppe du rouleau (12), de même qu'un second circuit de circulation de fluide, c'est-à-dire un circuit secondaire (30), qui est prévu pour envoyer le même fluide pour la régulation de la température dans la chambre non pressurisée (16) du rouleau, et en ce que la chambre de pression (15) communique avec la chambre non pressurisée (16) par un régulateur de différence de pression (25) par lequel tout fluide en excès est amené à être envoyé de la chambre de pression (15) vers la chambre non pressurisée (16).

5. Système de régulation selon la revendication 4, caractérisé en ce que le circuit primaire (20) est muni d'un certain nombre de buses (21) montées selon un espacement sensiblement uniforme sur la longueur de l'enveloppe (12) du rouleau de manière à introduire le fluide prévu pour la régulation de la température dans la chambre de pression (15) en étant distribué de façon sensiblement uniforme.

6. Système de régulation selon la revendication 4 ou 5, caractérisé en ce que le circuit secondaire (30) est muni d'un certain nombre de buses (31) montées selon un espacement sensiblement uniforme sur la longueur de l'enveloppe (12) du rouleau de manière à introduire le fluide prévu pour la régulation de la température dans la chambre non pressurisée (16) en étant distribué de façon sensiblement uniforme.

7. Système de régulation selon l'une quelconque des revendications 4 à 6, caractérisé en ce que le circuit secondaire (30) est muni de buses de lubrification (32) en vue de la lubrification des paliers d'extrémité (17) du rouleau (10).
